Europäisches Patentamt

**European Patent Office**

**Office européen des brevets**

(11) Numéro de publication: **0 073 535**
A2

(12) **DEMANDE DE BREVET EUROPEEN**

(21) Numéro de dépôt: **82201001.3**

(22) Date de dépôt: **11.08.82**

(51) Int. Cl.³: **A 23 G 3/02**

(30) Priorité: **02.09.81 BE 2059325**

(43) Date de publication de la demande: **09.03.83**
**Bulletin 83/10**

(84) Etats contractants désignés: **DE FR GB IT NL SE**

(71) Demandeur: **Aquarius, Coenrardus Hubertus, Heilig Wammesstraat 24, B-3680 Maaseik (BE)**

(72) Inventeur: **Aquarius, Coenrardus Hubertus, Heilig Wammesstraat 24, B-3680 Maaseik (BE)**

(74) Mandataire: **Donné, Eddy, M.F.J.Bockstael Arenbergstraat 13, B-2000 Anvers (BE)**

(54) **Machines perfectionnées pour la fabrication de confiseries, telles que spécialement des sucettes.**

㉗ L'invention a trait à des perfectionnements apportés aux machines pour la fabrication de confiseries, telles que, en particulier, des sucettes, qui consistent, d'une part, en des moyens sous forme d'une poulie preneuse (24) pour retirer les sucettes du tambour de moulage (1) et, d'autre part, en des mesures comportant l'abaissement local du bord entre deux espaces de moulage pour éviter que les sucettes ainsi fabriquées ne présentent des saillies aiguës ou bavures.

1

"Machines perfectionnées pour la fabrication de confiseries, telles que spécialement des sucettes"

La présente invention a trait à des machines perfectionnées pour la fabrication de confiseries, telles que, en particulier, des sucettes, du type comportant principalement un tambour muni de clapets périphériques y articulés et de rainures périphériques, parallèles à l'axe de rotation du tambour et destinées à coopérer avec des rainures prévues dans lesdits clapets, en vue de la formation d'espace de forme et de dimensions appropriées, dans lesquels se déplace à partir d'une des extrémités un tampon pour la formation de confiseries, telles que, en particulier, des sucettes, les confiseries ainsi formées pouvant être emmanchées sur un bâtonnet, y inséré par une ouverture à partir de l'autre extrémité de l'espace susmentionné.

Il s'avère toutefois dans la pratique que les machines du genre défini cidessus présentent, en dépit de leur fonctionnement fort efficace, deux inconvénients assez sérieux, dont le premier consiste en ce que l'évacuation des confiseries ainsi fabriquées, telles que, par exemple, des sucettes, est relativement compliquée et facilement sujette à des accrocs par suite du fait qu'elle doit s'effectuer par des moyens mécaniques, tels que des petits doigts ou autres, par lesquels les confiseries sont enlevées l'une après l'autre du tambour. Le deuxième inconvient des machines concernées consiste en ce que, par suite de l'introduction de la matière à traiter sous forme d'un boudin ininterrompu entre le tambour et les clapets et son débitage en portions effectué en principe par étranglement et sectionnement dudit boudin entre deux clapets successifs qui se ferment, il est pratiquement inévitable que des restes de confiserie saisis entre les bords des clapets voisins, forment, aussi minces qu'ils soient, sur les confiseries ou sucettes à éloigner de la machine, un bord souvent aigu, tout au moins assez désagréable pour le consommateur.

Or, la présente invention se propose de perfectionner les machines du genre susmentionné à un degré tel qu'est remédié aux inconvénients décrits dans les lignes précédentes.

A cet effet, les mesures de perfectionnement préconisées par la présente invention consistent, d'une part, en ce que pour le transport des sucettes à partir du tambour par exemple vers un dispositif d'emballage sont prévues une poulie munie d'encocher périphériques destinées à agir sur les bâtonnets des sucettes pour les détacher du tambour, et des plaques, montées de part et d'autre de ladite poulie en coopération avec elle, plaques sous lesquelles sont engagées les sucettes saisies par la poulie dans le but de les libérer de cette dernière par rotation ultérieure, et, d'autre part, en ce que lesdits bords présents entre les espaces délimités par le tambour et les clapets, sont munis localement d'une partie située sous l'axe géométrique de ces espaces.

Les caractéristiques et avantages de l'invention sont illustrés ci-après par la description détaillée d'un mode d'exécution préféré d'une machine perfectionné selon l'invention, donnée sans la moindre intention restrictive avec référence aux dessins annexés, où

la figure 1 représente une coupe horizontale du tambour pour la formation de confiseries;
les figures 2 et 3 représentent deux coupes pratiquées respectivement selon les lignes II-II et III-III de la figure 1;

la figure 4 représente à plus grande échelle la partie F4 de la figure 3;

la figure 5 représente une coupe pratiquée selon la ligne V-V de la figure 1;

la figure 6 représente à plus grande échelle la partie F6 de la figure 5; et

la figure 7 représente une coupe pratiquée selon la ligne VII-VII de la figure 6.

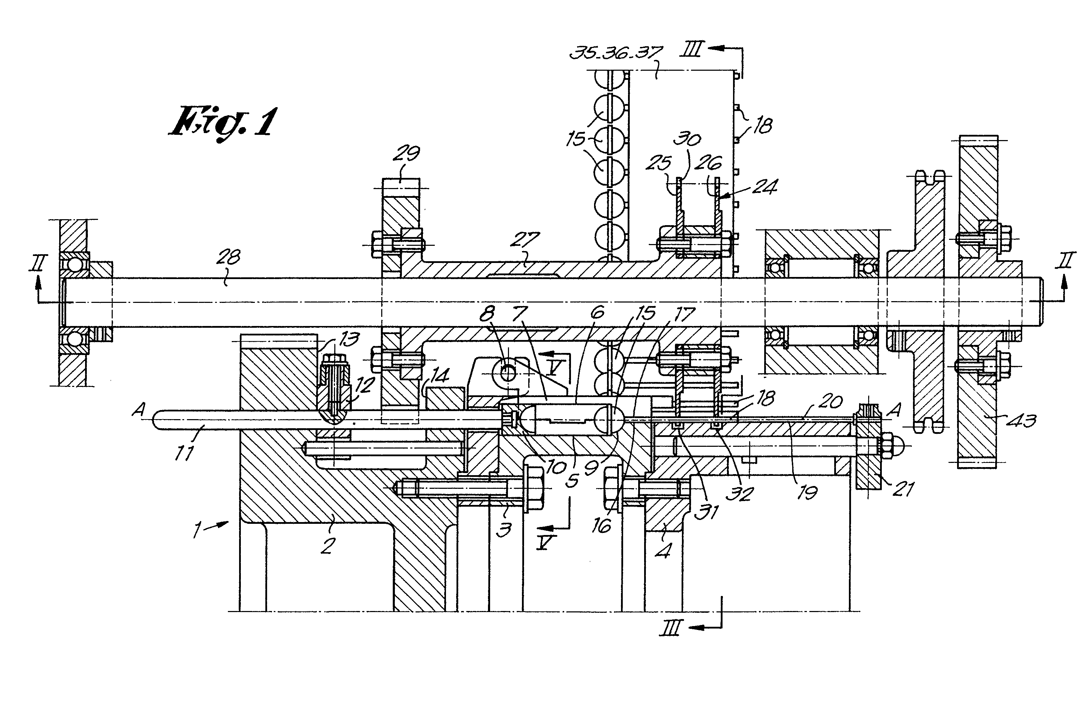

Comme on le voit en se reportant aux figures des dessins annexés, parmi lesquels surtout la figure 1, le tambour pour la confection de confiserie 1 se compose essentiellement de trois parties reliées entre elles 2, 3 et 4, dont la partie médiane 3 est tout autour munie de rainures semi-cylindriques adjacentes 5, parallèles à l'axe de rotation du tambour 5 et complétées par des rainures semi-cylindriques 6 des clapets 7, fixés chacun au moyen d'une articulation 8 au tambour 1.

L'extrémité antérieure 9 de l'espace ainsi formé 5-6 présente en l'occurrence, un profil concave-convexe, mais pourra évidemment avoir toute forme appropriée quelconque se prêtant à recevoir l'extrémité libre 10 d'un tampon 11, à son tour munie d'un creux de forme hémisphérique ou de toute autre forme appropriée, tout cela de manière que les creux 9 et 10 déterminent ensemble la forme de la confiserie voulue.

Ledit tampon 11 est muni d'une butée 12, qui permet son déplacement entre les plans 13 et 14 du tambour 1 au niveau où s'effectue le moulage proprement dit d'une sucette ou de toute autre confiserie analogue 15, déplacement qui est commandé par un système de cames non représentées, dont par exemple une agit sur l'extrémité libre du tampon 11 et l'autre agit sur la butée 12.

Dans chaque clapet 7 est prévu pour chaque espace 5-6 un passage aligné sur cet espace 5-6, d'une part, et sur le tambour 1, d'autre part, et formé par deux rainures semi-cylindriques 16 et 17, par lequel un bâtonnet 18 peut être introduit dans la sucette ou toute autre confiserie concernée 15, bâtonnet qui, de manière connue, tombe à partir d'un magasin non dessiné dans une rainure semi-cylindrique 19 de la partie 4 du tambour 1 et y est ensuite poussé par un poussoir 20 dans ledit passage 16-17 et finalement introduit dans la sucette 15. Ce poussoir 20 est fixé sur un élément 21 muni d'un mouvement de va-et-vient approprié sous la commande d'un mécanisme prévu à cet effet.

L'invention prévoit que les raccords latéraux respectivement 22 et 23 du tambour 1 et des clapets 7 entre deux espaces 5-6 sont conçus de manière qu'ils s'étendent sur une longueur L, supérieure à la largeur B du boudin de matière de confiserie alimentant la machine, sous l'axe A-A situé dans l'axe géométrique de l'espace 5-6.

L'invention prévoit également que la machine concernée est équipée en un point approprié, c'est-à-dire, en particulier, au point où les sucettes sont enlevées du tambour 1, d'une poulie preneuse 24, composée essentiellement de deux disques 25 et 26 fixés avec une distance mutuelle appropriée sur un moyeu 27 monté à rotation libre sur un axe 28 et portant une roue dentée 29 pour la commande de ladite poulie 24.

Ladite poulie 24, composée des disques 25 et 26, présente des encoches périphériques 30, dont la distance D correspond à la distance E entre deux axes A-A de deux espaces 5-6, le diamètre des deux disques 25-26 étant choisi de manière que lesdites encoches périphériques 30 peuvent coopérer avec les bâtonnets 18 de sucettes encore présentes sur le tambour. Afin de rendre possible ce qui est décrit dans les lignes précédentes, le tambour 1, à savoir surtout sa partie 4, est muni au niveau des disques 25 et 26 de deux gorges périphériques 31 et 32.

Bien que la commande des disques 25 et 26 puisse s'effectuer de toute manière appropriée quelconque, la roue dentée 29 est de préférence conçue de manière à pouvoir coopérer avec les tampons 11 afin d'assurer à tout moment un synchronisme parfait des mouvements de rotation des disques 25-26 et du tambour 1.

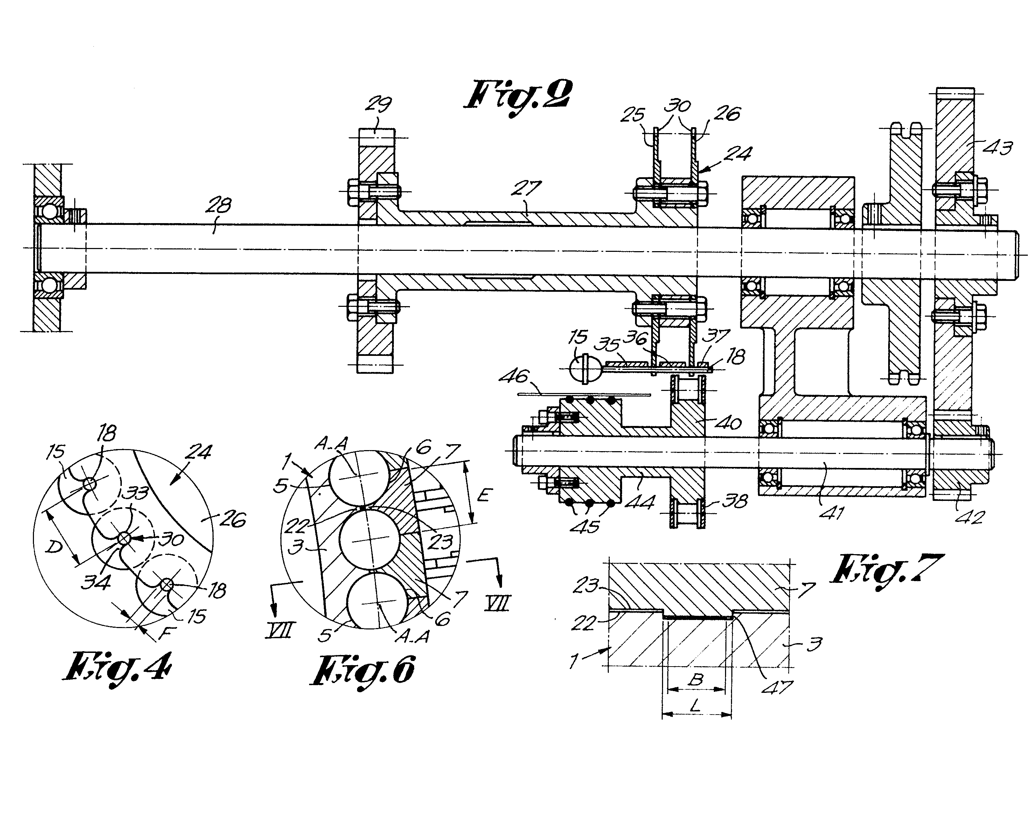

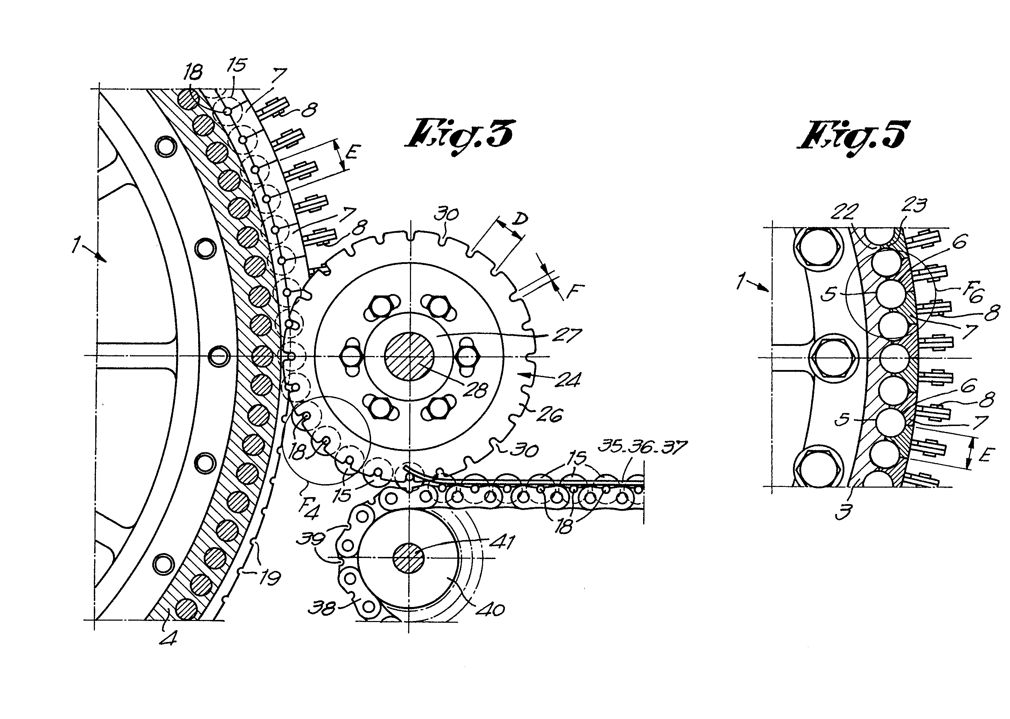

Comme le montre surtout la figure 4, les encoches 30 des disques 25 et 26 sont conçues de manière que la partie inférieure 33 de chacune d'elles présente un rayon de grandeur égale au demi diamètre d'un bâtonnet 18, tandis que la largeur F de l'ouverture de sortie 34 de l'encoche 30 est un peu plus petite que le diamètre d'un bâtonnet 18.

Comme le montrent surtout les figures 2 et 3, sous les disques 25 et 26 sont prévues trois plaques 35, 36 et 37, dont, comme le montre la figure 3, le bord antérieur est recourbé vers le haut. Sous ces plaques 35 et 36 est, d'une part, prévue une chaîne 38, dont les chaînons présentent des encoches 39 avec lesquelles les bâtonnets 18 peuvent coopérer, et qui embrasse une poulie à chaîne 40, portée par un arbre 41, commandé en synchronisme avec le susdit axe 28 au moyen d'un mécanisme de transmission approprié 42-43.

A cette poulie à chaîne 40 est en outre accouplé de manière appropriée un rouleau de commande 44 à gorges pour des courroies trapézoïdales, connu en soi et portant une bande d'une matière d'emballage 46.

L'emploi et le fonctionnement de la machine décrite dans les lignes précédentes sont des plus simples et se laissent décrire de la manière suivante.

Pour former une sucette 15, un boudin de confiserie d'une largeur pratiquement égale à B (fig. 7) est amené de manière connue sur le tambour 1 à clapets ouverts 7. Ce boudin se dépose sur le tambour de manière à s'y appliquer à coup sûr entre les limites de la partie déprimée L (fig. 7) des espaces 5-6, après quoi les clapets 7 se ferment, toujours de manière connue, de sorte qu'une faible quantité de matière de confiserie est, de manière connue, prise entre les bords 22 et 23, ce qui présente le risque que les sucettes fabriquées avec une machine conventionelle sont munies de bords aigus.

Par contre, dans les machines perfectionnées selon la présente invention, cette faible quantité de matière de confiserie est prise entre les parties à hauteur réduite (L) des bords 22 et 23, tout cela de manière que la progression du tampon 11 pour la formation de la sucette a comme conséquence que la quantité de matière de confiserie située entre les parties à hauteur réduite desdits bords est pour ainsi dire découpée de la quantité de matière de confiserie présente dans l'espace 5-6 grâce à la coopération de la partie 10 du tampon avec le bord 47 des bords à hauteur réduite 22 et 23 de manière à assurer dans tous les cas la formation de sucettes exemptes de bavures ou de bords aigus.

Les sucettes définitivement façonnées sont éloignées du tambour, le cas échéant après avoir subi un faible durcissement. Cela s'effectue selon le système de l'invention de manière aussi simple qu'efficace par rotation du tambour 1 contre la poulie 24. En effet, les bâtonnets et donc également les sucettes sont ainsi pris dans les encoches dûment profilées 30 de la poulie 24 et de ce fait entraînés par elle.

Les bâtonnets des sucettes ainsi entraînées arrivent sous lesdites plaques 35, 36 et 37, de sorte que les sucettes sont détachées de la poulie 24 grâce à la coopération de cette poulie, qui à ce niveau se meut vers le haut, avec lesdites plaques, et se déposent de manière appropriée sur la chaîne 38, c'est-à-dire dans les encoches 39, d'une part, et sur la matière d'emballage 46, d'autre part.

On voit qu'on obtient ainsi une machine qui se prête, d'une

7

0073535

part, à la formation de sucettes exemptes de bavures et de saillies ou bords aigus et, d'autre part, au transport simple et efficace, sans risque d'accrocs, des sucettes définitivement façonnées à partir du tambour par exemple vers le dispositif d'emballage.

Il va de soi que l'invention ne se limite pas à l'exemple de mise en oeuvre décrit dans les lignes précedentes et illustré par les dessins annexés, mais que les perfectionnements préconisés par l'invention se prêtent à toutes sortes d'autres réalisations en ce qui concerne la forme et les dimensions, évidemment à condition de ne pas dépasser le cadre de l'invention, défini par les revendications formulées ci-après.

Revendications.

1. Machine pour la fabrication de confiseries, telles que, en particulier, des sucettes, du type comportant essentiellement un tambour (1) muni de clapets périphériques (7) y articulé et présentant des rainures périphériques (5) parallèles à son axe de rotation et coopérant avec des rainures (6) prévues dans lesdits clapets (7) pour former des espaces de forme et de dimensions appropriées, dans lesquels se déplace à partir d'une des extrémités (9) un tampon (11) pour la formation de confiseries (15), telles que en particulier, des sucettes, les confiseries ou sucettes (15) ainsi formées pouvant être emmanchées sur un bâtonnet (18), y inséré par une ouverture appropriée (16-17) à partir de l'autre extrémité (10) de l'espace concerné (5-6), caractérisée en ce que pour le transport des sucettes définitivement façonnées (15) à partir du tambour (1) par exemple vers l'organe d'emballage de la machine sont prévues une poulie (24) munie d'encoches périphériques (30) destinées à agir sur les bâtonnets (18) des sucettes pour reprendre celles-ci du tambour (1), et des plaques (3536) montées de part et d'autre de la poulie (24) en coopération avec elle, plaques sous lesquelles sont engagées les sucettes (15) ainsi saisies par la poulie (24) dans le but de les libérer de cette dernière par rotation ultérieure.

2. Machine pour la fabrication de confiseries, caractérisée en ce que les bords (22-23) présents entre les espaces (5-6) délimités par le tambour (1) et les clapets (7), sont munis localement d'une partie située sous l'axe géométrique de ces espaces.

3. Machine selon la revendication 1, caractérisée en ce que chacune des dites encoches (30) présente une partie semi-cylindrique (33) dont le rayon est égal au demi-diamètre d'un bâtonnet (18) de sucette, tandis que la largeur de chaque encoche (30) est un peu plus petite que le diamètre des bâtonnets.

4. Machine selon la revendication 3, caractérisée en ce que les bords de l'ouverture de sortie (34) des encoches (30) sont arrondis.

5. Machine selon l'une ou l'autre des revendications 1, 3 et 4, caractérisée en ce que ladite poulie (24) se compose de deux disques (25,26) montés à une certaine distance mutuelle appropriée.

6. Machine selon l'une ou l'autre des revendications précédentes 1, 3 et 5, caractérisée en ce que ladite poulie (24) est montée sur un moyeu (27), qui porte également une roue dentée (29), qui coopère constamment avec les lesdits tampons (11) du tambour (1).

7. Machine selon l'une ou l'autre des revendications 1, 3-6, caractérisée en ce que lesdites plaques (35,36) sont montées de part et d'autre de ladite poulie (24) de manière que la face inférieure de chacune d'elles se trouve en dehors du diamètre de cette dernière, les bords antérieurs des plaques (35,36) étant recourbés vers le haut jusqu'à un niveau situé au-dessus de la partie inférieure semi-cylindrique (33) des encoches (30).

8. Machine selon l'une ou l'autre des revendications 1, 37, caractérisée en ce que le diamètre de ladite poulie (24) et la position de cette dernière par rapport aux bâtonnets (18) des sucettes situés sur le tambour (1) sont choisis de manière que ces bâtonnets (18) se trouvent dans une position relative en leur position de mise en oeuvre sur le tambour (1) et sont simultanément saisis par la partie inférieure (33) d'une encoche (30) de ladite poulie (24).

9. Machine selon la revendication 2, caractérisée en ce que les bords à hauteur réduite (22,23) desdits espaces (5,6) sont prévus sur une longueur qui est supérieure à la largeur d'un boudin de matière de confiserie.

*Fig.1*

Fig.7

Fig.6

Fig.4

Fig.6

*Fig.3*

*Fig.5*